# EUROPEAN PATENT APPLICATION

(11) **EP 2 511 855 A1**
(43) Date of publication of application: **17.10.2012**
(21) Application number: 11305425.8
(22) Date of filing: 11.04.2011
(51) Int. Cl.: G06K 19/07, H04W 4/02

(54) **Method of managing a NFC controller**

(71) Applicant: Gemalto SA, 92190 Meudon (FR)
(72) Inventor: Caruana, Jean-Paul, 83500 La Seyne sur Mer (FR); Capomaggio, Grégory, 13360 Roquevaire (FR); Buton, Christophe, 13420 Gemenos (FR)
(74) Representative: Grevin, Emmanuel

(57) **Abstract**

The invention is a method for managing a NFC controller embedded in a host device which comprises a secure element. The secure element is able to communicate with said NFC controller. The NFC controller is able to communicate with a contactless reader device according to a first behavior. The method comprises the steps of
- retrieving into the secure element a location data reflecting the geographical location of the host device,
- selecting a parameter based on the location data,
- authorizing a second behavior into the NFC controller thanks to said parameter.

## Description

### (Field of the invention)

The present invention relates to methods of managing a Near Field Communication (NFC) controller. It relates particularly to methods of managing a NFC controller through a secure element.

### (Background of the invention)

The NFC (Near Field Communication) technology is based on the exchanging of data via a magnetic field. A contactless reader device has an antenna which is able to modulate the magnetic field and to provide energy to other NFC devices. A NFC reader device is usually named a PCD (Proximity Coupling Device).

A NFC device may work according to three modes: card emulation mode, reader mode and Peer-To-Peer mode. In card emulation mode, the NFC device behaves like an existing contactless card. A NFC device working in card emulation mode may be a PICC (Proximity Integrated Circuit Card or Proximity Card) or may embed components which act as logical PICC.

The PICC and the PCD communicate thanks to an inductive coupling in a field frequency equal to 13.56 MHz. In particular, the ISO14443 and ISO18092 standards provide modulation technologies and communication protocols which may be used in NFC domain. A NFC device acting as a PICC comprises a contactless controller which manages the contactless communication.

Both a contactless card and a contactless reader device must comply with common specifications in order to be able to establish a communication session. These common specifications are generally defined by standards. Unfortunately, some contactless reader devices have a specific behavior which does not fully comply with standards specifications. Moreover the signals sent by any contactless reader devices when initializing a communication do not allow detecting the type of the contactless reader device. Thus the NFC controller of a PICC is unable to detect the type of the contactless reader device and may be unable to establish a contactless communication with some contactless reader devices. It is to be noted that some contactless infrastructures sharing a specific behavior are generally deployed in particular countries or areas.

There is a need for automatically adapt the behavior of a NFC controller according to a present contactless reader device.

### (Summary of the Invention)

An object of the invention is to solve the above mentioned technical problem.

The object of the present invention is a host device comprising a secure element and a NFC controller. The secure element is able to communicate with said NFC controller and to retrieve from the host device a location data that reflects the geographical location of the host device. The NFC controller is able to communicate with a contactless reader device according to a first behavior. The secure element comprises an activation means which is adapted to authorize a second behavior in the NFC controller based on the location data.

Advantageously, the NFC controller may comprise a selecting means adapted to select either said first behavior or second behavior according to a data sent by the contactless reader device.

Advantageously, the data sent by the contactless reader device may comprise an identifier of application type and the selecting means may be adapted to select either said first or second behavior according to the identifier.

Optionally, the location data may be generated by a GPS means.

Advantageously, the location data may be generated by a GSM means.

The secure element may be a UICC and the host device may be a telecom equipment.

Advantageously, the activation means may be adapted to select a parameter based on the location data and said parameter may be sent to the NFC controller through an Application Family Identifier.

The secure element may be a microSD ® device.

Another object of the invention is a method for managing a NFC controller embedded in a host device which comprises a secure element. The secure element is able to communicate with said NFC controller. The NFC controller is able to communicate with a contactless reader device according to a first behavior. The method comprises the steps of:
- retrieving into the secure element a location data reflecting the geographical location of the host device,
- selecting a parameter depending on the location data,
- authorizing a second behavior into the NFC controller thanks to said parameter.

Advantageously, the NFC controller may select either said first behavior or second behavior according to a data sent by the contactless reader device.

Advantageously, the NFC controller may select either said first behavior or second behavior according to an identifier of application type sent by the contactless reader device.

Optionally, the location data may be generated by a GPS means.

Advantageously, the location data may be generated by a GSM means

Advantageously, the secure element (SE) may be a UICC and the host device may be a telecom equipment

Advantageously, the parameter may be sent to the NFC controller through an Application Family Identifier.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts a system comprising a contactless reader and a host device which comprises a secure element and a NFC controller according to an embodiment of the invention;
- Figure 2 depicts schematically an example of communications between a NFC reader and an embedded NFC controller according to the prior art; and
- Figure 3 depicts schematically an example of communications between a NFC reader and an embedded NFC controller according to a first embodiment of the invention.

### (Detailed description of the preferred embodiments)

The invention relies on the automatic enabling of a specific behavior of the NFC controller according to the location of the host device which embeds the NFC controller. Thus the NFC controller may be customized based on the geographical place where the host device is used.

A NFC controller is a hardware module also named ContactLess Front-end chip (CLF). The invention may apply to any types of NFC controller which are able to manage a card emulation mode. The invention may apply to any types of host devices which embed such NFC controller. These host devices may be portable devices like mobile phone or Electronic Funds Transfer Terminals for payment. These devices may also be fixed devices like smart poster. These devices may also be Machine-to-machine devices like slot machines, gas meters or cars.

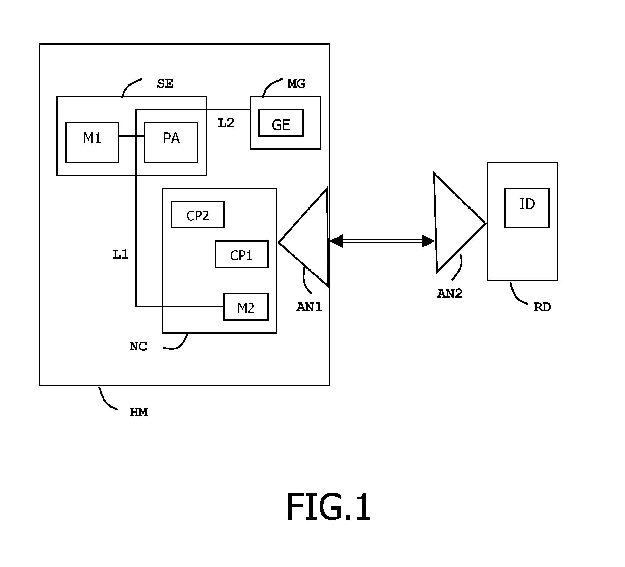

**Figure 1** shows an example of a system comprising a contactless reader device RD and a host device HM which comprises a secure element SE and a NFC controller NC according to an embodiment of the invention.

The contactless reader device RD is a NFC reader which has its own antenna AN2. The reader device RD comprises an application (not shown) and an identifier ID of the type of the application. For example, the application may be of transport type, of payment type or access type.

The host device HM comprises an antenna AN1, a NFC controller NC, a secure element SE and a means MG.

The means MG is able to provide the secure element SE with a location data GE which depends on the geographical location of the host device HM. In a preferred embodiment, the means MG uses the GSM (Global System for Mobile Communications) infrastructure for providing the location data GE. For example, the current GSM cell may be used as location data GE.

Alternatively, the means MG may be able to get signals coming from satellites and able to compute the location data GE from these signals. For example, the means MG may use the GPS (Global Positioning System).

Alternatively, the means MG may use a Wi-Fi hotspot for retrieving geolocalisation information.

The means MG may be able to compute the location data GE from received signals. The means MG may be able to get the location data GE from a source which is outside of the host device HM.

Advantageously, the location data GE may reflect a very small area (for example a small area less then 10 km²), a town, a district, a region, a country, a group of countries or a continent.

In a preferred embodiment, the host machine is a mobile phone and the secure element SE is a Universal Integrated Circuit Card (UICC).

Alternatively, the secure element SE may be a Secure Digital (SD) card, a miniSD card, a microSD card, a smart card or a software secure element.

The secure element SE may be a removable element or a welded element.

Advantageously, the secure element may be seen by the NFC controller as a host element according to the ETSI TS102613 and ETSI TS102622 standards. Alternatively, the secure element and the NFC controller may communicate by using any other relevant protocols, like SigIn-SigOut-Connection (S²C) for example.

The secure element SE may be able to manage the card emulation mode as defined by the ETSI TS102622 standard.

The NFC controller NC and the secure element SE are linked by a wire link L1. The link L1 allows a communication in contact mode between the NFC controller NC and the secure element SE. In a preferred embodiment, both the NFC controller NC and the secure element SE use the Single Wire protocol (SWP) as defined by the TS 102.613. Alternatively, the NFC controller NC and the secure element SE may be linked by any kind of link.

The NFC controller NC is able to communicate with the reader RD according to a default behavior. When running with this default behavior, the NFC controller NC use a first set of communication parameters which comply with the ISO/IEC 14443 standard. For example, the used time TR1 is set to 80 × 1/Fs. (i.e. Number of sub-carrier clocks count)

The secure element SE comprises an activation means M1 which is able to authorize a second behavior in the NFC controller NC. The second behavior corresponds to a second set of communication parameters. For example, in the second set, the time TR1 is set to 256.

The second behavior is different from the default behavior.

Advantageously, the activation means M1 is a software component.

The means MG and the secure element SE are linked by a link L2 which allows the activation means M1 to get the location data GE from the means MG. The link L2 may be either a direct or indirect link.

Alternatively, the secure element SE may comprise the means MG.

In one embodiment, the secure element SE comprises a parameter PA. The activation means M1 is able to select the parameter PA according to the location data GE and to send the parameter PA to the NFC controller NC in order to authorize a second behavior in the NFC controller NC. Advantageously, the secure element SE comprises a plurality of parameters which correspond to as many different behaviors.

Advantageously, the secure element SE comprises a plurality of set of parameters which correspond to as many different behaviors.

In the example of Figure 1, the controller NC comprises two sets of communication parameter CP1 and CP2. The first set CP1 contains the communication parameters to be used for the default behavior. The second set CP2 contains the communication parameters to be used for a second behavior.

In one embodiment, the controller NC comprises a selecting means M2 which is able to select the behavior to be used according to a data sent by the reader device RD. The selecting means M2 is able to select the appropriate behavior among all behaviors allowed in the controller NC.

Advantageously, the selecting means M2 is a software component.

In a preferred embodiment, the selecting means M2 is able to select the appropriate behavior thanks to the identifier ID sent by the reader device RD. Thus the controller NC may use the default behavior for a first type of application domain and the second behavior for another type of application domain. For instance, the default behavior may be used for payment transaction and the second behavior may be used for transport transaction.

The transport transaction may be carried out through a Transport application embedded in both the secure element SE and the reader device RD. Such Transport application may provide access to a public transport network. The payment transaction may be carried out through a Payment application embedded in both the secure element SE and the reader device RD. The type of these applications is not restricted. These applications may be electronic ticketing, e-wallet, debit/credit payment card, electronic keys for accessing a car/a house / a room, etc. The NFC reader RD comprises a reader-part application (not drawn) which is intended to communicate with PICC-part application embedded in the secure element SE.

According to ISO14443 standard, the targeted application selection may be performed by the reader device RD through the Application Family Identifier (AFI). Thus the identifier ID may be conveyed through the AFI.

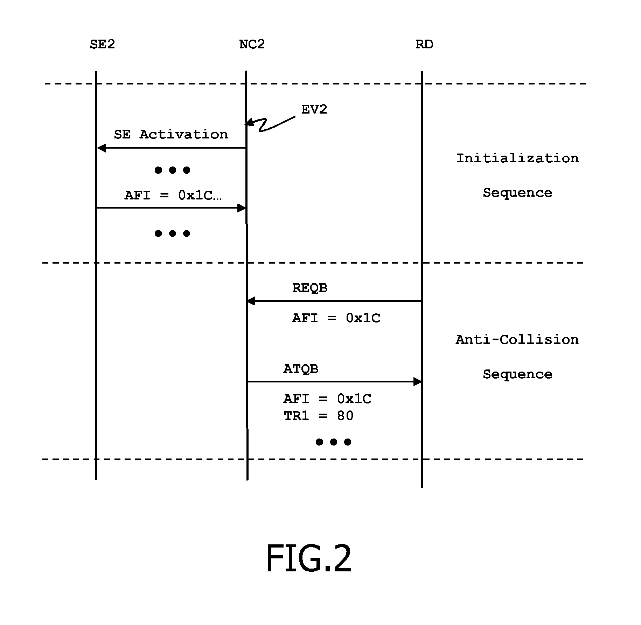

**Figure 2** shows an example of communications between the NFC reader device RD and an embedded NFC controller NC2 according to the prior art.

The NFC controller NC2 is assumed to be linked to a secure element SE2. Both NFC the controller NC2 and the secure element SE2 are embedded in a host device.

The reader device RD is assumed to work according to ISO14443 type B specifications.

First an event EV2 occurs at NFC controller NC2 side. For instance, the event EV2 may be a RF-ON signal sent by the reader device RD or a power on reset performed by the host device. Then the controller NC2 activates the secure element SE2 and starts an initialization sequence. During this sequence, the secure element SE2 setups the controller NC2 with an AFI equal to 0x1C.

When the anti-collision sequence starts, the reader device RD sends a REQB frame to the controller NC2 for initiating a communication. The REQB frame comprises an AFI equal to 0x1C. In response, the controller NC2 sends an ATQB frame to the reader device RD by using a TR1 equal to 80. Such a value of TR1 is a usual value which complies with ISO14443 type B specifications. The ATQB frame comprises an AFI equal to 0x1C. Then the PICC is considered as activated and the contactless session is open. The contactless communication may go on with applicative data exchanges.

When facing a reader device that requires the use of specific communication parameters, the NFC controller NC2 cannot respond properly to the reader device. Thus the applicative transaction cannot be performed.

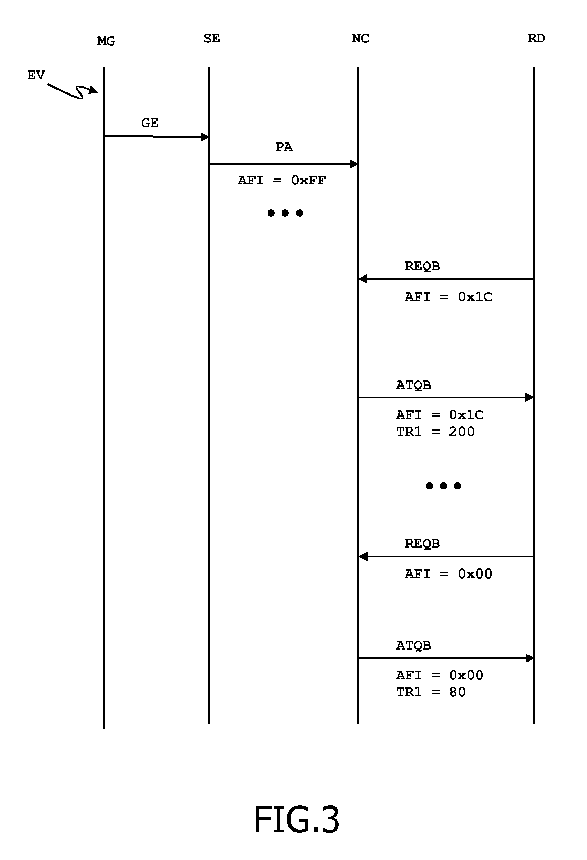

**Figure 3** shows an example of communications between the NFC reader device RD and an embedded NFC controller NC according to an embodiment of the invention.

The NFC controller NC and the secure element SE are those which have been described at Figure 1.

The reader device RD is assumed to work according to ISO14443 type B specifications.

First an event EV occurs at the means MG side. For instance, the event EV may be a request sent to the means MG by the secure element SE. The event EV may happen during the boot phase of the secure element or of the host device HM, or a status change of the host device HM like a GSM network attachment to a cell roaming. The means MG gets a localization data GE and sends this data GE to the secure element SE.

Then the secure element SE selects the parameter PA according to the received location data GE. Advantageously, the secure element may comprise a table providing the association between location data and parameters to be used for contactless communication.

Alternatively, the secure element SE may have a means able to query another component to get the parameter corresponding to the received location data GE. Then the secure element SE sends a frame to the controller NC. This frame contains the parameter PA. For example, the parameter PA may be conveyed through the AFI. For instance, the AFI may be equal to 0×FF. This value means that the controller NC will be authorized to work according to a second behavior. When receiving the AFI=0xFF, the controller NC records a data to keep track of the second behavior enabling. The recorded data may be the AFI as such, a flag or any relevant field. The controller NC is assumed to be able to retrieve the relevant communication parameters set CP2 by using the received parameter PA. The controller NC may comprise the communication parameter sets or may be able to query a distinct component to get these parameter sets.

Alternatively, the secure element SE may send the communication parameters set in addition to the parameter PA. Thus the secure element SE may provide the controller NC with the communication parameters set to be used for the second behavior.

The controller NC is supposed to known the application type for which the second behavior should be used when communicating. For instance, the controller NC is assumed to known that the second behavior is dedicated to Transport application.

Alternatively, the application type associated to the second behavior is sent by the secure element SE to the controller NC in addition to the parameter PA.

Then the anti-collision sequence starts. The reader device RD sends a first REQB message to the controller NC for initiating a communication. The REQB message comprises an AFI equal to 0x1C. The value 0x1C corresponds to a Transport application.

Then the controller NC retrieves the type of application which has been sent in the REQB message. In the present example, the application type is defined by the AFI. The controller NC checks if a special behavior must be used for Transport application. Since a second behavior has been enabled for the Transport application in the controller NC, the controller NC selects the second behavior. In other words, the communication parameters set CP2 is selected and become active for the contactless communication with the reader device RD. Then the controller NC sends an ATQB frame to the reader device RD by using a TR1 equal to 200. The value 200 is a communication parameter corresponding to the second behavior. In order to comply with ISO 14443 specifications, the ATQB frame comprises an AFI equal to 0x1C. (i.e. same AFI value as AFI initially received from the reader device RD). Then the PICC is considered as activated and the contactless session is open. The contactless communication may go on with applicative data exchanges for a Transport application.

Another anti-collision sequence may start as shown at Figure 3. The reader device RD sends a second REQB message to the controller NC for initiating a communication. The REQB message comprises an AFI equal to 0×00. Note that the second REQB frame may be send by another contactless reader device distinct from the reader device RD.

The controller NC retrieves the type of application which has been sent in the REQB message. In the present example, the application type is defined by the AFI. The value 0×00 means the reader RD accepts all application families. The controller NC checks if a special behavior must be used for an unknown application type. Since a no specific behavior has been authorized for unspecified applications in the controller NC, the controller NC selects its default behavior. In other words, the communication parameters set CP1 is selected and become active for the contactless communication with the reader device RD. Then the controller NC sends an ATQB frame to the reader device RD by using a TR1 equal to 80. The ATQB frame comprises an AFI equal to 0x00. Then the PICC is considered as activated and the contactless session is open. The contactless communication may go on with applicative data exchanges.

In the examples described for Figure 3, the controller NC uses the identifier of application type to select the appropriate behavior. In another embodiment, the controller NC may always use the second behavior when the second behavior has been enabled by the secure element. In other words, whatever the type of application, the controller NC will use the communication parameter set CP2.

Advantageously, the secure element SE may authorize several behaviors in parallel. For example the default behavior remains active for transport applications, a second behavior is activated for financial applications, a third behavior is activated for gaming applications and a fourth for Identification applications.

Advantageously, a parameter PA and a communication parameter set may be remotely updated into the secure element SE. For example, when the secure element is a SIM card, the parameter PA and its associated set may be updated through the Over-The-Air (OTA) mechanism. New parameters may also be remotely downloaded into the secure element.

Advantageously, a specific behavior may correspond to a particular set of RF characteristics or particular protocol parameters. For example a particular set may be used to setup the RF load modulation amplitude of the NFC controller. Another set may be used to adjust the Frame Delay Time (FDT) to synchronize the controller response.

Advantageously, the secure element SE may use a data which is not an AFI for conveying the parameter PA to the NFC controller NC. For example, the secure element SE may use proprietary command for conveying the parameter PA to the NFC controller NC.

An advantage of the invention is to be compliant with the already deployed contactless reader devices.

Another advantage of the invention is to allow a single host device configuration which is able to work on a pluralities of different contactless infrastructure.

Thanks to a particular embodiment of the invention, a currently existing mobile phone may be used without update.

## Claims

1. A **host device** (HM) comprising a secure element (SE) and a NFC controller (NC), said secure element (SE) being able to communicate with said NFC controller (NC) and to retrieve from the host device (HM) a location data (GE) reflecting the geographical location of said host device (HM), the NFC controller (NC) being able to communicate with a contactless reader device (RD) according to a first behavior,
**characterized in that** the secure element (SE) comprises an activation means (M1) adapted to authorize a second behavior in the NFC controller (NC) based on the location data (GE).

2. A host device (HM) according to claim 1, wherein the NFC controller (NC) comprises a selecting means (M2) adapted to select either said first behavior or second behavior according to a data sent by the contactless reader device (RD).

3. A host device (HM) according to claim 2, wherein the data sent by the contactless reader device (RD) comprise an identifier (ID) of application type, and wherein the selecting means (M2) is adapted to select either said first or second behavior according to the identifier (ID).

4. A host device (HM) according to any one of claim 1 to 3, wherein said location data (GE) is generated by a GPS means.

5. A host device (HM) according to any one of claim 1 to 3, wherein said location data (GE) is generated by a GSM means.

6. A host device (HM) according to any one of claim 1 to 5, wherein said secure element (SE) is a UICC and said host device (HM) is a telecom equipment.

7. A host device (HM) according to claim 6, wherein said activation means (M1) is adapted to select a parameter (PA) based on the location data (GE) and wherein said parameter (PA) is sent to the NFC controller (NC) through an Application Family Identifier.

8. A host device (HM) according to any one of claim 1 to 5, wherein said secure element (SE) is a microSD ® device.

9. A **method** for managing a NFC controller (NC) embedded in a host device (HM) which comprises a secure element (SE), said secure element (SE) being able to communicate with said NFC controller (NC), the NFC controller (NC) being able to communicate with a contactless reader device (RD) according to a first behavior,
**characterized in that** the method comprises the steps of
- retrieving into the secure element (SE) a location data (GE) reflecting the geographical location of said host device (HM),
- selecting a parameter (PA) based on the location data (GE)
- authorizing a second behavior into the NFC controller (NC) thanks to said parameter (PA).

10. A method according to claim 9, wherein the NFC controller (NC) selects either said first behavior or second behavior according to a data sent by the contactless reader device (RD).

11. A method according to any one of claim 9 to 10, wherein the NFC controller (NC) selects either said first behavior or second behavior according to an identifier (ID) of application type sent by the contactless reader device (RD).

12. A method according to any one of claim 9 to 11, wherein said location data (GE) is generated by a GPS means.

13. A method according to any one of claim 9 to 12, wherein said location data (GE) is generated by a GSM means

14. A method according to any one of claim 9 to 13, wherein said secure element (SE) is a UICC and said host device (HM) is a telecom equipment

15. A method according to any one of claim 9 to 14, wherein said parameter (PA) is sent to the NFC controller (NC) through an Application Family Identifier.
